# EUROPÄISCHE PATENTSCHRIFT

(11) **EP 0 857 365 B1**
(45) Veröffentlichungstag und Bekanntmachung des Hinweises auf die Patenterteilung: **23.06.1999**
(21) Anmeldenummer: 96945526.0
(22) Anmeldetag: 24.10.1996
(51) Int. Cl.: H02G 5/00

(54) **ABGANGS- UND GERÄTEKASTEN EINES ENERGIEVERTEILSYSTEMS**
TAP-OFF AND CONTROL GEAR BOXES FOR A POWER-DISTRIBUTION SYSTEM
BOITE DE DERIVATION ET COFFRET D'APPAREILLAGE D'UN SYSTEME DE DISTRIBUTION D'ENERGIE

(30) Priorität: 28.10.1995 DE 19540339
(43) Veröffentlichungstag der Anmeldung: 12.08.1998
(73) Patentinhaber: Klöckner-Moeller GmbH, 53115 Bonn (DE)
(72) Erfinder: VON HASSELT, Georg, D-54576 Hillesheim (DE); AMMANN, Eckhard, D-53819 Seelscheid (DE); MOELLER, Hans, D-53121 Bonn (DE)
(86) Internationale Anmeldenummer: DE9602018
(87) Internationale Veröffentlichungsnummer: WO9715971

(56) Entgegenhaltungen:
- FR-A- 2 634 326
- FR-A- 2 669 175
- GB-A- 814 492
- US-A- 4 957 447

## Beschreibung

Die vorliegende Erfindung betrifft einen Abgangskasten eines Energieverteilsystems und einen Gerätekasten zum Anbau an einen Abgangs- oder Einspeisekasten eines Energieverteilsystems, mit Befestigungsmitteln zum Befestigen des Abgangs- und Gerätekastens an Schienenkanälen der Energieverteilsystems, mit einem Basiselement zur Aufnahme von Schalt- und/oder Schutzgeräten und/oder Sicherungen und mit einem Deckel zum Verschließen des Basiselements, wobei das Basiselement und der Deckel derart korrespondierend ausgebildet sind, daß der Deckel das Basiselement verschließt.

Die US-A-4 957 447 beschreibt einen derartigen Abgangskasten.

Energieverteilsysteme werden vornehmlich in Werkstätten, Labors, Ausstellungsräumen, Krankenhäusern, Gewächshäusern oder dergleichen eingesetzt, in denen der Stromverbrauch den eines üblichen Haushalts übersteigt. Deshalb sind die hier in Rede stehenden Energieverteilsysteme für einen Strom von 40 A und mehr ausgelegt.

Innerhalb der Energieverteilsysteme wird der Strom in sogenannten in Schienenkanälen angeordneten Stromschienen transportiert. Bei den bekannten Energieverteilsystemen sind in jedem Schienenkanal vier Stromschienen vorgesehen, wobei jede Stromschiene die Energie in einer anderen Phase transportiert, so daß ein Schienenkanal einen L1, L2, L3 und einen N-Leiter aufweist.

Zur Stromentnahme sind an den Schienenkanälen in regelmäßigen Abständen Abgangsstellen vorgesehen, an denen sogenannte Abgangskästen befestigt werden können. Diese Abgangskästen weisen je nach Einsatzzweck Schalt- oder Schutzgeräte, Schmelzsicherungen, Magnetsicherungen oder handelsübliche Schuko-Steckdosen auf. Diese Abgangskästen sind einzeln abnehmbar und können entsprechend den vorliegenden Gegebenheiten an den jeweils gewünschten Abgangsstellen angebracht werden.

Der in dem Energieverteilsystem zu verteilende Strom wird über sogenannte Einspeisekästen in die Stromschienen eingespeist. Diese Einspeisekästen werden an den Nahtstellen zweier Schienenkanäle auf diese aufgeschoben und mittels an den Einspeisekästen befindlichen Montagevorrichtungen an dem Schienenkanal befestigt.

Die bekannten Abgangs- oder Gerätekästen bestehen aus einem Unter- und Oberteil aus Kunststoff, die im Spritzgußverfahren hergestellt sind. Für jedes im Spritzgußverfahren hergestellte Einzelteil muß ein relativ teures Werkzeug hergestellt werden, so daß die Herstellungskosten der bekannten Geräte- und Abgangskästen sehr hoch sind, insbesondere da Kästen verschiedener Größen zur Aufnahme der jeweils benötigten Geräte hergestellt und bereitgehalten werden müssen.

Davon ausgehend liegt der vorliegenden Erfindung die Aufgabe zugrunde, Abgangs- und/oder Gerätekästen zu schaffen, die kostengünstig herzustellen sind.

Als technische Lösung dieser Aufgabe wird erfindungsgemäß vorgeschlagen, den Abgangs- und/oder Gerätekasten der eingangs genannten Art dahingehend weiterzubilden, daß das Basiselement aus einem Basisprofilelement, einem Basiskopfteil und einem Basisendteil zusammengesetzt ist und daß der Deckel aus einem Deckelprofilelement, einem Deckelkopfteil und einem Deckelendteil zusammengesetzt ist.

Dies hat den Vorteil, daß sich die Kästen aus mehreren Einzelteilen zusammensetzen und daß einige Einzelteile mehrfach verwendet werden können, so daß die Herstellungskosten, insbesondere die Werkzeugkosten, dadurch gesenkt werden.

In einer vorteilhaften Weiterbildung sind die Kopfteile des Abgangskasten als Kontakttrennstelle ausgebildet, die die im Abgangskasten befindlichen Geräte von den Stromschienen elektrisch abtrennt, sobald der Deckel geöffnet ist. Im Gegenzug sind die Endteile des Abgangskasten so ausgebildet, daß sie ein Scharnier bilden. Dieses Scharnier bildet dann mit der Kontakttrennstelle, dem Basisprofilelement und dem Deckelprofilelement einen Abgangskasten.

In einer anderen, vorteilhaften Weiterbildung ist das Basiskopfteil identsich mit dem Basisendteil und das Deckelkopfteil ist identisch mit dem Deckelendteil. Hierdurch können die in einem Werkzeug hergestellten Basis- bzw. Deckelteile auf beiden Seiten des Gerätekastens eingesetzt werden, so daß zu deren Fertigung nur ein einziges Werkzeug benötigt wird.

In einer bevorzugten Ausführungsform ist das Basisprofilelement und/oder das Deckelelement aus einem im Strangpressverfahren hergestellten Aluminium- oder Kunststoffprofil gefertigt. Dies hat den Vorteil, daß mit einem einzigen Werkzeug ein quasi endlos langes Profil hergestellt wird, welches je nach Bedarf abgelängt wird.

Erfindungsgemäß wird das Basisprofilelement des Abgangskasten und das Basisprofilelement des Gerätekastens, sowie das Deckelprofilelement des Abgangskasten und das Deckelprofilelement des Gerätekasten aus demselben, im Strangpressverfahren hergestellten Profil gefertigt. Dabei kann durch Verwendung eines entsprechend langen Profiles jeder Kasten entsprechend den Gegebenheiten ausgelegt werden. Das heißt, daß in Abhängigkeit der Anzahl und Größe der einzubauenden Geräte das Basisprofilelement und das Deckelprofilelement entsprechend dimensioniert werden, bevor die Kopf- und Endteile an den Profilelementen angebracht werden. Hierdurch ist es möglich, mit vergleichsweise wenig Einzelteilen individuell dimensionierte Abgangs- oder Gerätekästen herzustellen. Auch wird durch die Verwendung des strangpressgezogenen Profiles die Anzahl der im Spritzgußverfahren herzustellenden Einzelteile drastisch gesenkt, so daß die erfindungsgemäß hergestellten Abgangs- oder Gerätekästen sehr kostengünstig herzustellen sind.

In einer anderen, bevorzugte Ausführungsform ist das Basisprofilelement und/oder das Deckelprofilelement ein im Spritzgußverfahren hergestelltes Kunststoffprofil. Die zuvor genannten Vorteile gelten hier im wesentlichen auch, da auch dieses Kunststoffprofil mit einem einzigen Werkzeug hergestellt werden kann. Weiterhin kann dieses Kunststoffprofil dann je nach Bedarf gekürzt werden, so daß es auch möglich ist, mit zwei verschiedenen Profilen sämtliche Kastenformen abzudecken.

In einer weiteren, besonders bevorzugten Ausführungsform ist an mindestens einer Seitenwand des Basisprofilelementes mindestens eine Öffnung ausgestanzt, damit Stromleitungen in den Abgangs- oder Gerätekasten hineingeführt werden können. Diese Ausstanzungen sind vorzugsweise kreisrund ausgeführt.

In einer vorteilhaften Weiterbildung ist das ausgestanzte Element nach dem Ausstanzen in die Öffnung zurückgedrückt worden, so daß das Element nunmehr kraftschlüssig in der Öffnung gehalten ist. Hierdurch wird ein Basisprofilelement aus einem Aluminium- oder Kunststoffprofil bereitgestellt, welches geschlossen ausgeführt ist und dennoch die Möglichkeit eröffnet, Öffnungen zur Durchführung von Stromleitungen zu schaffen. Dies geschieht in einfacher Weise dadurch, daß das ausgestanzte Element mit einem Werkzeug aus der Öffnung herausgedrückt wird.

In noch einer weiteren, bevorzugten Ausführungsform sind die aus Kunststoff hergestellten Kopf- und Endteile metallisiert. Dies hat den Vorteil, daß der mit einem Aluminiumprofil hergestellte Abgangs- oder Gerätekasten einen faradayschen Käfig bildet und die in dem Kasten angebrachten Geräte abschirmt.

In einer bevorzugten Weiterbildung wird die Metallisierung der Kopf- und Endteile dadurch erreicht, daß diese auf ihrer Innenseite mit einem Schirmblech ausgekleidet sind oder dadurch, daß auf der Innenseite der Kopf- und Endteile ein metallischer Film aufgebracht ist oder dadurch, daß die Kopf- und die Endteile aus einem Kunststoff mit einer metallischen Substanz in Form von Metallpulver oder einem Metallgitter hergestellt sind.

In einer weiteren, bevorzugten Ausführungsform sind an den Abgangs- oder Gerätekästen federbelastete Halteklammern vorgesehen, die als Befestigungsmittel zur Befestigung des Kastens am Schienenkanal dienen.

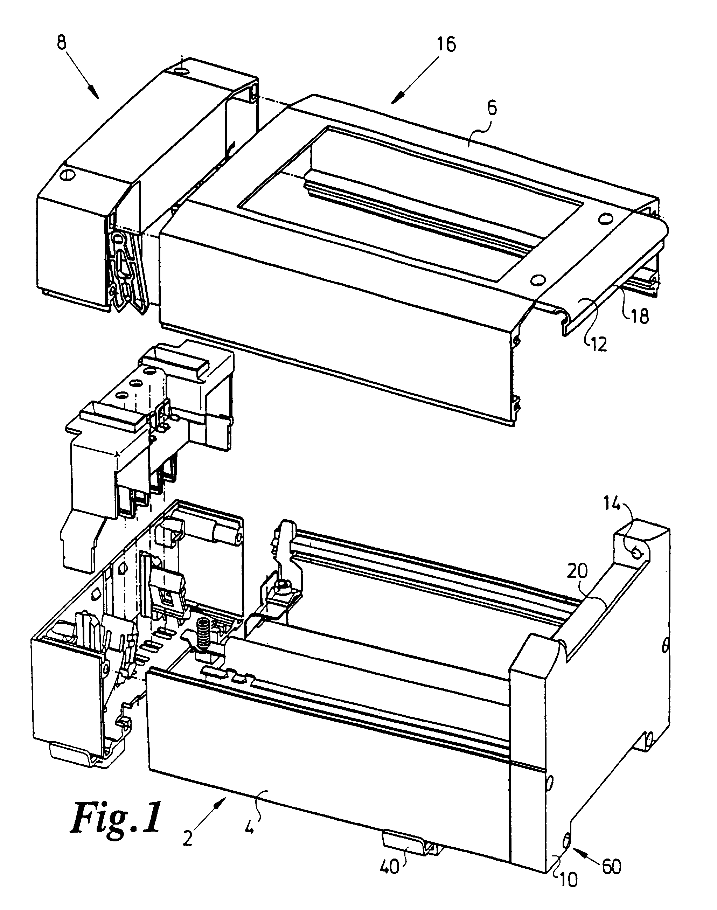

Weitere Vorteile der erfindungsgemäßen Vorrichtung ergeben sich aus der Beschreibung der Ausführungsformen und der beigefügten Zeichnungen. Ebenso können die vorstehend genannten und die noch weiter aufgeführten Merkmale erfindungsgemäß jeweils einzeln oder in beliebigen Kombinationen miteinander verwirktlich werden. Die erwähnten Ausführungsformen sind nicht als abschließende Aufzählung zu verstehen, sondern haben vielmehr beispielhaften Charakter. Ausführungsformen der Erfindung sind in den Figuren 1 bis 8 dargestellt und werden im folgenden näher erläutert:
- Figur 1: zeigt eine perspektivische Explosionsdarstellung eines erfindungsgemäßen Abgangskastens;
- Figur 2: zeigt eine perspektivische Explosionsdarstellung eines erfindungsgemäßen Gerätekastens;
- Figur 3: zeigt eine Frontansicht eines Basisprofilelementes geschnitten entlang Linie III-III in Figur 5;
- Figur 4: zeigt einen Ausschnitt des Basisprofilelementes gemäß Figur 3, der durch die Linie IV-IV gezeigt ist;
- Figur 5: zeigt eine Draufsicht auf das Basisprofilelement gemäß Figur 3;
- Figur 6: zeigt eine Seitenansicht des Basisprofilelementes gemäß Fig. 3;
- Figur 7: zeigt eine perspektivische Darstellung eines an einem Schienenkanal befestigten Abgangskastens gemäß Figur 1 und eines Gerätekastens gemäß Figur 2;
- Figur 8: zeigt eine perspektivische Darstellung eines an einem Schienenkanal befestigten Einspeisekastens und eines Gerätekasten gemäß Figur 2.

Die einzelnen Figuren der Zeichnung zeigen den erfindungsgemäßen Gegenstand, teilweise stark schematisiert, und sind nicht maßstäblich zu verstehen. Dabei sind die Gegenstände der einzelnen Figuren teilweise stark überproportional vergrößert dargestellt, damit ihr Aufbau gezeigt werden kann.

Der in **Figur 1** in einer perspektivischen Explosionsdarstellung gezeigte Abgangskasten **2** setzt sich aus einem Basisprofilelement **4**, einem auf das Basisprofilelement **4** aufsetzbaren Deckelprofilelement **6**, einer an die Profilelemente **4, 6** anbringbaren Kontakttrennstelle **8**, einem Basisendteil **10** und einem Deckelendteil **12** zusammen. Das Deckelendteil **12** wird mit zwei Schrauben oder Nieten an einem freien Ende des Deckelprofilelementes **6** angebracht und ist derart gebogen ausgebildet, daß es in quer vom Basisendteil **10** abstehende Zapfen **14** eingreift und bei geschlossenem Deckel **16** mit seiner querverlaufenden Flachkante **18** an einem Anschlag **20** des Basisendteils zum Anliegen kommt, so daß das Basisendteil **10** und das Deckelendteil **12** ein Scharnier bilden.

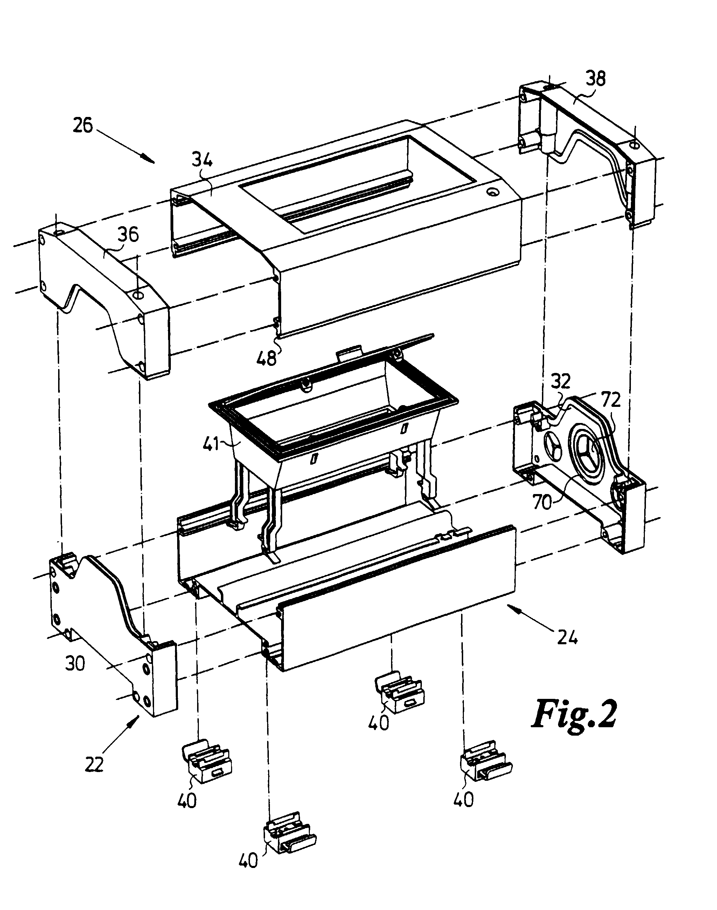

Der in **Figur 2** in einer perspektivischen Explosionsdarstellung gezeigte Gerätekasten **22** setzt sich aus einem Basiselement **24** und einem dazu passenden Deckel **26** zusammen. Das Basiselement **24** und der Deckel **26** sind ähnlich aufgebaut, wobei das Basiselement **24** aus einem Basisprofilelement **28**, einem Basiskopfteil **30** und einem Basisendteil **32** zusammengebaut ist, während der Deckel **26** aus einem Deckelprofilelement **34**, einem Deckelkopfteil **36** und einem Deckelendteil **38** zusammengebaut ist.

Das Basiskopfteil **30** und das Basisendteil **32** sind identische Bauteile, die an den jeweiligen Stirnseiten des Basisprofilelementes **28** angeschraubt werden. Analog dazu werden auch die identischen Deckelkopfteile **36** und Deckelendteil **38** an das Deckelprofilelement **36** angeschraubt.

An einer Rückseite des Basisprofilelementes **28** sind vier federbelastete Halteklammern **40** angebracht, mit denen der Gerätekasten **22** an Schienenkanälen eines Energieverteilsystems angebracht werden kann. In analoger Weise sind am Abgangskasten **2** ebenfalls vier Halteklammern angebracht.

Das Basisprofilelement **4** des Abgangskasten **2** und das Basisprofilelement **28** des Gerätekastens **22** sind identische Profile, vorzugsweise Hutprofile aus Aluminium, die im Strangpressverfahren hergestellt werden. Ebenso ist das Deckprofilelement **6** des Abgangskasten **2** im Profil identisch mit dem Deckelprofilelement **34** des Gerätekastens **22**. Auch dieses Profilelement ist aus Aluminium und wird im Stanggußverfahren hergestellt.

In das Deckelprofilelement **34** ist ein Kunststoffeinsatz **41** eingelassen, in den Schalter oder Sicherungen eingebaut werden können, die häufig benutzt werden, denn der Kunststoffeinsatzn **41** ist nach vorne offen und somit sind die darin eingebauten Schalter und Sicherungen leicht zugänglich.

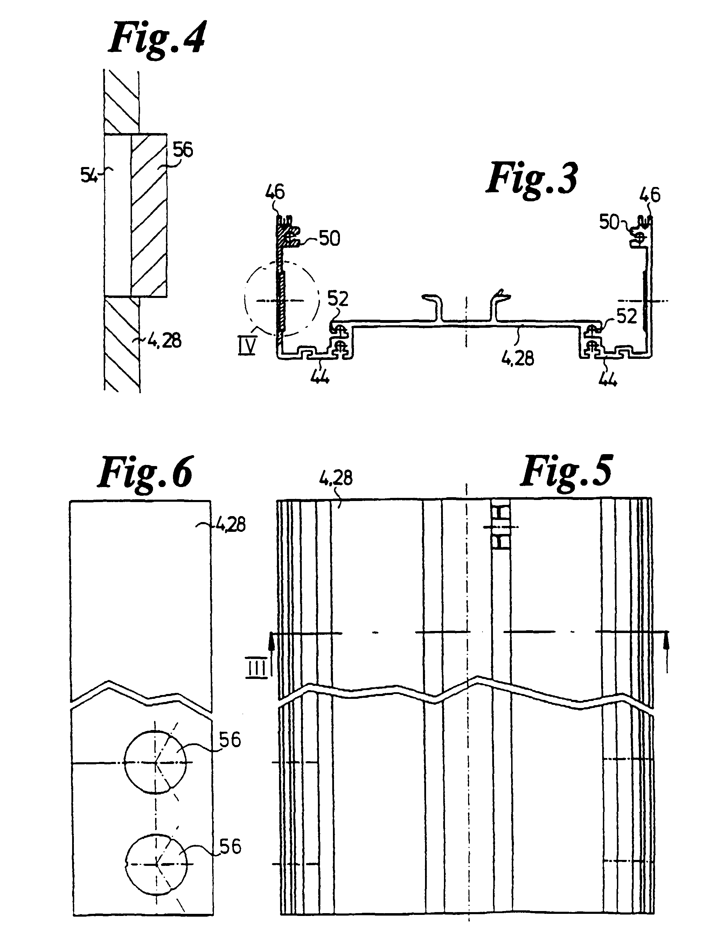

Das sowohl im Abgangskasten **2**, als auch im Gerätekasten **22** verwendete Basisprofilelement **4, 28** ist in den **Figuren 3** bis **6** detalliert gezeigt. Dem in **Figur 3** gezeigten Profil ist zu entnehmen, daß das Basisprofilelement **4, 28** in der Mitte eine genormte Hutschiene **42** aufweist, an der die Schalter, Schütze oder Sicherungen befestigt werden können. An der rückwärtigen Ober- und Unterkante des Basisprofilelementes **4, 28** sind zwei Profilschienen **44** ausgebildet, in die die federbelasteten Halteklammern **40** eingesetzt werden können. An beiden freien Enden des im wesentlichen U-förmig profilierten Basisprofilelementes **4**, **28** sind Längssicken **46** ausgebildet, in die entsprechende Dichtkanten **48** des Deckelprofilelementes **6, 34** eingreifen können. Unterhalb der Längssicken **46** sind Befestigungsschienen **50** vorgesehen, in die Befestigungsschrauben zur Befestigung des Basiskopfteiles **30**, des Basisendteiles **32**, des Basisendteiles **10** oder Kontaktstelle **8** eingreifen. Weitere Befestigungsschienen **52** sind oberhalb der Profilschienen **44** angeordnet.

An Seitenwänden **54** des Basisprofilelementes **4, 28** sind jeweils zwei Öffnungen **54** vorgesehen, durch die Kabel hindurchgeführt werden können. Diese Öffnungen **54** werden durch Ausstanzen eines kreisrunden Elementes **56** erzeugt. Dabei wird das Element **56** nicht vollständig, sondern nur zu einem Großteil ausgestanzt und anschließend zum Teil in die Öffnung **54** zurückgedrückt, so daß das Element **56** kraftschlüssig in der Öffnung **54** gehalten ist und diese verschließt, wie in **Figur 4** dargestellt ist. Durch Drücken auf das Element **56**, z. B. mit einem Werkzeug, fällt dieses aus der Öffnung **54** heraus und die entsprechenden Kabel können durch die Öffnung **54** hindurchgeführt werden.

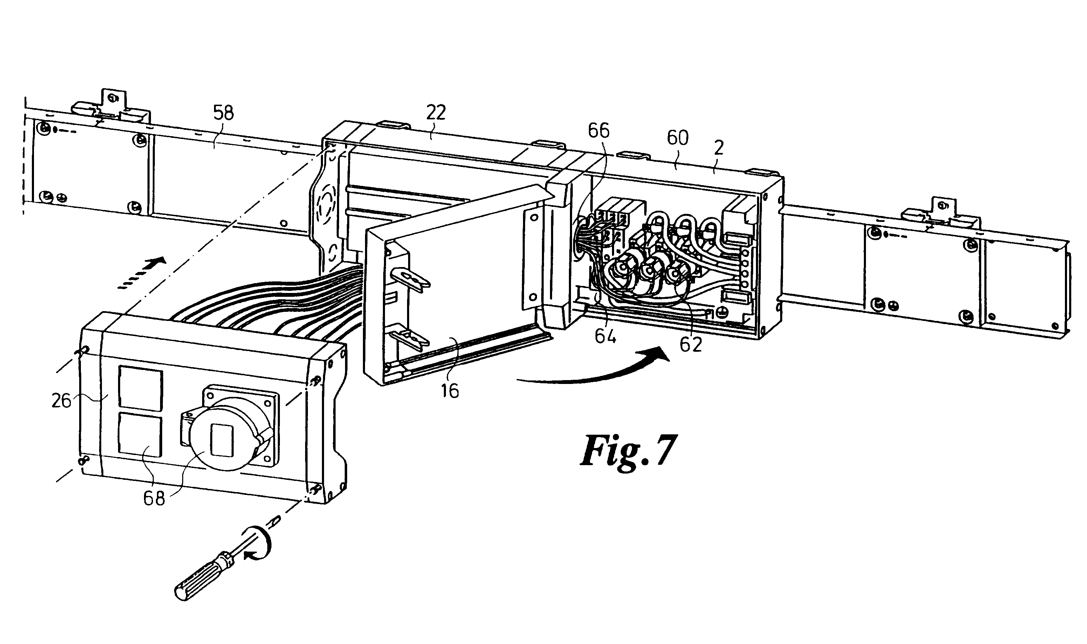

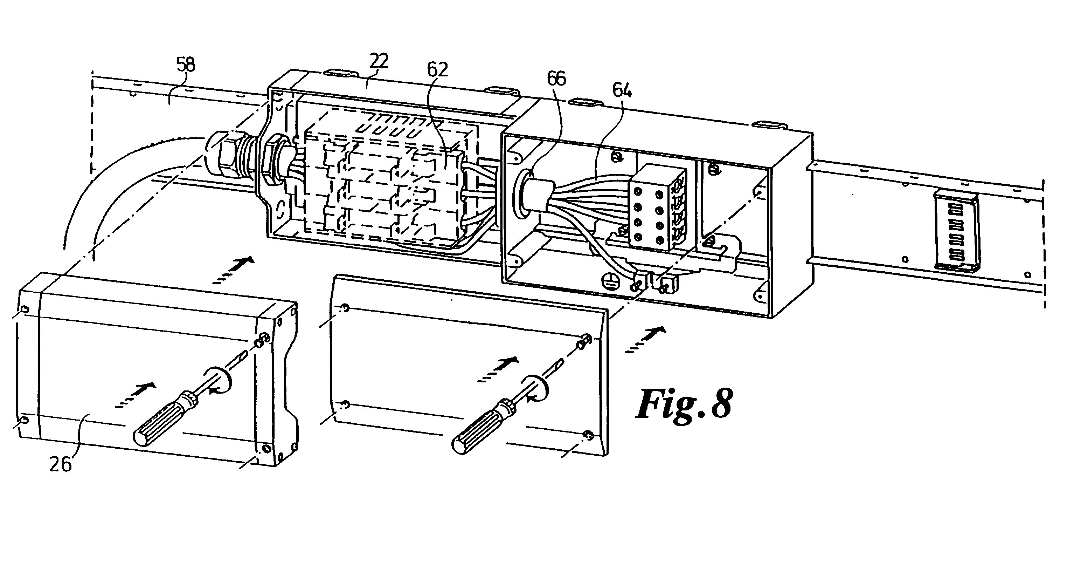

In den **Figuren 7** und **8** sind zwei Montagebeispiele gezeigt. In **Figur 7** ist der Abgangskasten **2** zur Abzweigung des Stromes aus dem Schienenkanal **58** an demselben mittels der federbelasteten Halteklammern **40** befestigt. An der Hutschiene **42** des Basiselementes **60** des Abgangskasten **2** sind drei Sicherungen **62** installiert. Die von den Sicherungen **62** abgehenden Kabel **64** führen durch eine Kabelöffnung **66** in den unmittelbar hinter dem Abgangskasten **2** angereihten Gerätekasten **22** und sind mit in dem Deckel **26** des Gerätekastens **22** installierten Steckdosen **68** verbunden.

Sowohl in dem Basisendteil **10** des Abgangskasten **2**, als auch in dem Basiskopfteil **30** und dem Basisendteil **32** des Gerätekastens **22** sind Sollbruchöffnungen **70** vorgesehen. Diese Sollbruchöffnungen **70** werden durch Materialverjüngung oder gar Materialaussparungen erzeugt, wobei das Sollbruchteil **72** nur noch über wenige Materialbrücken mit dem Kopf- **30** oder Endteil **10, 32** verbunden ist. Zur Erstellung der Kabelöffnung **66** braucht nun lediglich das Sollbruchteil **72** der Sollbruchöffnung **50** herausgebrochen werden, was aufgrund der Materialaussparung bzw. Materialverjüngung in einfacher Weise möglich ist.

In **Figur 8** ist ein am Schienenkanal **58** angebrachter Einspeisekasten zur Einspeisung von Energie in den Schienenkanal **58** dargestellt, an den sich ein Gerätekasten **22** anschließt. In dieser Ausführungsform sind im Gerätekasten **22** Schalter, Schütze oder Sicherungen angebracht, die das Einspeisen der Energie in den Schienenkanal **58** steuern können.

## Patentansprüche

1. Abgangskasten eines Energieverteilsystems, mit Befestigungsmitteln zum Befestigen des Abgangskastens (2) an Schienenkanälen (58) des Energieverteilsystems, mit einem Basiselement (60) zur Aufnahme von Schalt- und/oder Schutzgeräten und/oder Sicherungen (62) und mit einem Deckel (16) zum Verschließen des Basiselements (60), wobei das Basiselement (60) und der Deckel (16) derart korrespondierend ausgebildet sind, daß der Deckel (16) das Basiselement (60) verschließt,
**dadurch gekennzeichnet, daß**
das Basiselement (60) aus einem Basisprofilelement (4), einem Basiskopfteil und einem Basisendteil (10) zusammengesetzt ist, und daß der Deckel (16) aus einem Deckelprofilelement (6), einem Deckelkopfteil und einem Deckelendteil (12) zusammengesetzt ist.

2. Abgangskasten nach Anspruch 1,
**dadurch gekennzeichnet, daß**
die Kopfteile als Kontakttrennstelle (8) ausgebildet sind.

3. Abgangskasten nach wenigstens einem der vorhergehenden Ansprüche,
**dadurch gekennzeichnet, daß**
die Endteile (10, 12) als Scharnier ausgebildet sind.

4. Gerätekasten zum Anbau an einen Abgangs- oder Einspeisekasten eines Energieverteilsystems, mit Befestigungsmitteln zum Befestigen des Gerätekastens (22) an Schienenkanälen (58) des Energieverteilsystems, mit einem Basiselement (24) zur Aufnahme von Schalt- und/oder Schutzgeräten und/oder Sicherungen (62) und mit einem Deckel (26) zum Verschließen des Basiselements (24), wobei das Basiselement (24) und der Deckel (26) derart korrespondierend ausgebildet sind, daß der Deckel (26) das Basiselement (24) verschließt,
**dadurch gekennzeichnet, daß**
das Basiselement (24) aus einem Basisprofilelement (24), einem Basiskopfteil (30) und einem Basisendteil (32) zusammengesetzt ist, und daß der Deckel (26) aus einem Deckelprofilelement (34), einem Deckelkopfteil (36) und einem Deckelendteil (38) zusammengesetzt ist.

5. Gerätekasten nach Anspruch 4,
**dadurch gekennzeichnet, daß**
das Basis- (30) und das Deckelkopfteil (36), sowie das Basis- (32) und das Deckelendteil (38) identisch ausgebildet sind.

6. Abgangs- oder Gerätekasten nach wenigstens einem der vorhergehenden Ansprüche,
**dadurch gekennzeichnet, daß**
das Basisprofilelement (4, 28) und/oder das Deckelprofilelement (6, 34) ein im Strangpressverfahren hergestelltes Aluminium- oder Kunststoffprofil ist.

7. Abgangs- oder Gerätekasten nach wenigstens einem der vorhergehenden Ansprüche,
**dadurch gekennzeichnet, daß**
das Basisprofilelement (4, 28) und/oder das Deckelprofilelement (6, 34) ein im Spritzgußverfahren hergestelltes Kunstoffprofil ist.

8. Abgangs- oder Gerätekasten nach wenigstens einem der vorhergehenden Ansprüche,
**dadurch gekennzeichnet, daß**
an mindestens einer Seitenwand des Basisprofilelementes (4, 28) mindestens eine Öffnung (54) ausgestanzt ist.

9. Abgangs- oder Gerätekasten nach Anspruch 8,
**dadurch gekennzeichnet, daß**
das ausgestanzte Element (56) kraftschlüssig in der Öffnung (54) gehalten ist.

10. Abgangs- oder Gerätekasten nach wenigstens einem der vorhergehenden Ansprüche,
**dadurch gekennzeichnet, daß**
die aus Kunststoff hergestellten Kopf- (8, 30, 36) und Endteile (10, 12, 32, 38) metallisiert sind.

11. Abgangs- oder Gerätekasten nach Anspruch 10,
**dadurch gekennzeichnet, daß**
die Kopf- (8, 30, 36) und die Endteile (10, 12, 32, 38) auf ihrer Innenseite mit einem Schirmblech ausgekleidet sind.

12. Abgangs- oder Gerätekasten nach Anspruch 10,
**dadurch gekennzeichnet, daß**
auf der Innenseite der Kopf- (8, 30, 36) und der Endteile (10, 12, 32, 38) ein metallischer Film aufgebracht ist.

13. Abgangs- oder Gerätekasten nach Anspruch 10,
**dadurch gekennzeichnet, daß**
die Kopf- (8, 30, 36) und die Endteile (10, 12, 32, 38) aus einem Kunststoff mit einer metallischen Substanz in Form von Metallpulver oder einem Metallgitter hergestellt sind.

14. Abgangs- oder Gerätekasten nach wenigstens einem der vorhergehenden Ansprüche,
**dadurch gekennzeichnet, daß**
die Befestigungsmittel als federbelastete Halteklammern (40) ausgebildet sind.

## Claims

1. Outgoing cabinet of an energy distribution system with fixing means for fixing the outgoing cabinet (2) to bar channels (58) of the energy distribution system, including a base element (60) for the reception of switching and/or protection devices and/or fuses (62), and a cover (16) to close the base element (60), with the base element (60) and the cover (16) being designed in such a corresponding way that the cover (16) closes the base element (60),
**characterized in that**
the base element (60) consists of base sectional element (4), a base head part, and a base end part (10), and that the cover (16) is composed of a cover sectional element (6), a cover head part, and a cover end part (12).

2. Outgoing cabinet as claimed in claim 1,
**characterized in that**
the head parts are designed as a contact separation point (8).

3. Outgoing cabinet as claimed in at least one of the above-mentioned claims,
**characterized in that**
the end parts (10, 12) are designed as a hinge.

4. Device cabinet for mounting on an outgoing or supply cabinet of an energy-distribution system, including fixing means for the fixing of the device cabinet (22) to bar channels (58) of the energy-distribution system, including a base element (24) for the reception of switching and/or protection devices and/or fuses (62) and a cover (26) to close the base element (24), with the base element (24) and the cover (26) being designed in such a corresponding way that the cover (26) closes the base element (24),
**characterized in that**
the base element (24) consists of base sectional element (24), a base head part (30), and a base end part (32), and that the cover (26) is composed of a cover sectional element (34), a cover head part (36), and a cover end part (38).

5. Device cabinet as claimed in claim 4,
**characterized in that**
the base (30) and the cover head part (36), as well as the base (32) and the cover end part (38) have an identical design.

6. Outgoing or device cabinet as claimed in at least one of the above-mentioned claims,
**characterized in that**
the base sectional element (4, 28) and/or the cover sectional element (6, 34) is a section made of aluminium or synthetic material manufactured by extrusion.

7. Outgoing or device cabinet as claimed in at least one of the above-mentioned claims,
**characterized in that**
the base sectional element (4, 28) and/or the cover sectional element (6, 34) is a section made of synthetic material manufactured by injection moulding.

8. Outgoing or device cabinet as claimed in at least one of the above-mentioned claims,
**characterized in that**
at least one opening (54) has been punched out of at least one lateral wall of the base sectional element (4, 28).

9. Outgoing or device cabinet as claimed in claim 8,
**characterized in that**
the element (56) punched out is held in the opening (54) by non-positive fit.

10. Outgoing or device cabinet as claimed in at least one of the above-mentioned claims,
**characterized in that**
the head (8, 30, 36) and end parts (10, 12, 32, 38), which are made of synthetic material, are metallized.

11. Outgoing or device cabinet as claimed in claim 10,
**characterized in that**
the head (8, 30, 36) and end parts (10, 12, 32, 38) are clad with a shroud sheet metal on their inside.

12. Outgoing or device cabinet as claimed in claim 10,
**characterized in that**
a metallic coating is placed on the inside of the head (8, 30, 36) and end parts (10, 12, 32, 38).

13. Outgoing or device cabinet as claimed in claim 10,
**characterized in that**
the head (8, 30, 36) and end parts (10, 12, 32, 38) are made of a synthetic material including a metallic substance in the form of metal powder or of a metal grid.

14. Outgoing or device cabinet as claimed in at least one of the above-mentioned claims,
**characterized in that**
the fixing means are designed as spring-loaded holding clamps (40).

## Revendications

1. Boîte de sortie d'un système de distribution électrique, avec des pièces de fixation pour la fixation de la boîte de sortie (2) sur des canalisations de barres (58) du système de distribution électrique, avec un élément de base (60) pour le logement d'appareils de coupure et/ou de protection et/ou de fusibles (62) et avec un couvercle (16) pour la fermeture de l'élément de base (60), ledit élément de base (60) et le couvercle (16) étant formés pour correspondre en sorte que le couvercle (16) obture l'élément de base (60),
**caractérisée en ce que**
l'élément de base (60) se compose d'un élément profilé de base (4), d'une pièce de tête de base et d'une pièce d'extrémité de base (10), et en ce que le couvercle (16) se compose d'un élément profilé de couvercle (6), d'une pièce de tête de couvercle et d'une pièce d'extrémité de couvercle (12).

2. Boîte de sortie selon revendication 1,
**caractérisée en ce que**
les pièces de tête sont formées comme point de coupure de contact (8).

3. Boîte de sortie selon l'une des revendications précédentes au moins,
**caractérisée en ce que**
les pièces d'extrémité (10, 12) sont formées comme charnière.

4. Boîte d'appareil à monter sur la boîte de sortie ou d'alimentation d'un système de distribution électrique, avec des pièces de fixation pour la fixation de la boîte d'appareil (22) sur des canalisations de barres (58) du système de distribution électrique, avec un élément de base (24) pour le logement d'appareils de coupure et/ou de protection et/ou de fusibles (62) et avec un couvercle (26) pour la fermeture de l'élément de base (24), ledit élément de base (24) et le couvercle (26) étant formés pour correspondre en sorte que le couvercle (26) obture l'élément de base (24),
**caractérisée en ce que**
l'élément de base (24) se compose d'un élément profilé de base (28), d'une pièce de tête de base (30) et d'une pièce d'extrémité de base (32), et en ce que le couvercle (26) se compose d'un élément profilé de couvercle (34), d'une pièce de tête de couvercle (36) et d'une pièce d'extrémité de couvercle (38).

5. Boîte d'appareil selon revendication 4,
**caractérisée en ce que**
la pièce de tête base (30) et la pièce de tête de couvercle (36), ainsi que la pièce d'extrémité de base (32) et la pièce d'extrémité de couvercle (38) sont formées à l'identique.

6. Boîte de sortie ou d'appareil selon l'une des revendications précédentes au moins,
**caractérisée en ce que**
l'élément profilé de base( 4, 28) et/ou l'élément profilé de couvercle (6, 34) sont des profilés d'aluminium ou de résine synthétique fabriqués par procédé d'extrusion.

7. Boîte de sortie ou d'appareil selon l'une des revendications précédentes au moins,
**caractérisée en ce que**
l'élément profilé de base (4, 28) et/ou l'élément profilé de couvercle (6, 34) sont des profilés de résine synthétique fabriqués par procédé de moulage par injection.

8. Boîte de sortie ou d'appareil selon l'une des revendications précédentes au moins,
**caractérisée en ce qu'**
au moins une ouverture (54) est réalisée par estampage sur une paroi latérale au moins de l'élément profilé de base (4, 28).

9. Boîte de sortie ou d'appareil selon revendication 8,
**caractérisée en ce que**
l'élément estampé (56) est maintenu par force mécanique dans l'ouverture (54).

10. Boîte de sortie ou d'appareil selon l'une des revendications précédentes au moins,
**caractérisée en ce que**
les pièces de tête (8, 30, 36) et d'extrémité (10, 12, 32, 38) réalisées en résine synthétique sont métallisées.

11. Boîte de sortie ou d'appareil selon revendication 10,
**caractérisée en ce que**
la face interne des pièces de tête (8, 30, 36) et d'extrémité (10, 12, 32, 38) est revêtue d'une tôle de blindage.

12. Boîte de sortie ou d'appareil selon revendication 10,
**caractérisée en ce qu'**
un film métallique est appliqué sur la face interne des pièces de tête (8, 30, 36) et d'extrémité (10, 12, 32, 38).

13. Boîte de sortie ou d'appareil selon revendication 10,
**caractérisée en ce que**
les pièces de tête (8, 30, 36) et d'extrémité (10, 12, 32, 38) sont produites à partir d'une résine synthétique avec une matière métallique sous forme de poudre de métal ou de treillis métallique.

14. Boîte de sortie ou d'appareil selon l'une des revendications précédentes au moins,
**caractérisée en ce que**
les pièces de fixation sont formées comme étriers de retenue (40) pourvus d'un ressort.
